# FASCICULE DE BREVET EUROPEEN

(11) **EP 3 802 680 B1**
(45) Date de publication et mention de la délivrance du brevet: **09.10.2024**
(21) Numéro de dépôt: 19728030.8
(22) Date de dépôt: 29.05.2019
(51) Int. Cl.: C08J 11/16

(54) **PROCÉDÉ DE TRAITEMENT D'UN MÉLANGE DE PLASTIQUES PAR OXYDATION MÉNAGÉE**
VERFAHREN ZUR BEHANDLUNG EINES KUNSTSTOFFGEMISCHES DURCH KONTROLLIERTE OXIDATION
PROCESS FOR TREATING A PLASTIC MIXTURE BY CONTROLLED OXIDATION

(30) Priorité: 08.06.2018 FR 1855031
(43) Date de publication de la demande: 14.04.2021
(73) Titulaire: BRGM, 45060 Orléans Cedex 2 (FR)
(72) Inventeur: SERON, Alain, 45590 Saint-Cyr-en-Val (FR); MENAD, Nour-Eddine, 45100 Orléans (FR); LAPERCHE, Valérie, 45160 Olivet (FR)
(74) Mandataire: LLR
(86) Numéro de dépôt international: PCT/EP2019/064062
(87) Numéro de publication internationale: WO 2019/233873

(56) Documents cités:
- EP-A1- 3 178 874
- WO-A1-02/24795
- WO-A1-2010/125190
- DE-A1- 19 519 865
- FR-A1- 3 059 330
- KR-A- 20140 053 826
- US-A- 5 500 328
- HUANG LUOLUO ET AL: "Microwave-assisted surface modification for the separation of polycarbonate from polymethylmethacrylate and polyvinyl chloride waste plastics by flotation", WASTE MANAGEMENT AND RESEARCH, vol. 35, no. 3, 15 March 2017 (2017-03-15), US, pages 294 - 300, XP093046548, ISSN: 0734-242X, Retrieved from the Internet <URL:http://journals.sagepub.com/doi/full-xml/10.1177/0734242X16682078> DOI: 10.1177/0734242X16682078
- WANG CHONGQING ET AL: "Optimization of surface treatment for flotation separation of polyvinyl chloride and polyethylene terephthalate waste plastics using response surface methodology", JOURNAL OF CLEANER PRODUCTION, ELSEVIER, AMSTERDAM, NL, vol. 139, 24 August 2016 (2016-08-24), pages 866 - 872, XP029765453, ISSN: 0959-6526, DOI: 10.1016/J.JCLEPRO.2016.08.111
- WANG CHONGQING ET AL: "Flotation separation of polyvinyl chloride and polyethylene terephthalate plastics combined with surface modification for recycling", WASTE MANAGEMENT., vol. 45, 1 November 2015 (2015-11-01), US, pages 112 - 117, XP093046647, ISSN: 0956-053X, DOI: 10.1016/j.wasman.2015.07.053
- WANG CHONG-QING ET AL: "A novel process for separation of polycarbonate, polyvinyl chloride and polymethyl methacrylate waste plastics by froth flotation", WASTE MANAGEMENT, vol. 65, 8 April 2017 (2017-04-08), pages 3 - 10, XP085062001, ISSN: 0956-053X, DOI: 10.1016/J.WASMAN.2017.04.006

## Description

### Domaine de l'invention

L'invention porte sur un procédé de modification des propriétés de surface de mélange de plastiques par oxydation en vue de la flottation sélective de certains d'entre euxafin de favoriser leur valorisation matière ou énergie.

### Art antérieur

Du fait de l'importance des volumes mis en jeu, la valorisation des déchets de plastiques issus de la filière des RBA (Résidus de Broyage Automobile), de celle des DEEE (Déchets d'Equipements Electriques et Electroniques) voire des OM (Ordures Ménagères) devient une nécessité absolue dans l'objectif de l'évolution vers une économie circulaire. Les déchets issus de la filière des RBA sont constitués en majorité depolypropylène isotactique (PP) (ou (PPi)), de polycarbonate(PC), de poly(chlorure de vinyle)(PVC), d'acrylonitrile butadiène styrène (ABS), de polyoxyméthylène (POM), (sous forme d'homopolymère (POMh) ou de copolymère (POMc)), de poly(téréphtalate d'éthylène) (PET), ou de mélanges de ces composés plastiques entre eux-mêmes ou avec d'autres composés (par exemple d'ABS-PS (acrylonitrile butadiène styrène-polystyrène) oud'ABS-PC(acrylonitrile butadiène styrène- polycarbonate))
Deux modes de valorisation peuvent être envisagés :
- la valorisation matière qui nécessite, à partir d'un gisement de déchets de plastiques, la récupération de lots de plastiques purs pouvant être utilisés comme matière première ;
- la valorisation thermique pour laquelle les plastiques sont injectés dans des fours en substitution des combustibles habituels. Cette forme de valorisation peut aussi permettre d'utiliser les déchets de plastique comme agent réducteur dans le domaine de l'aciérie.

Quel que soit le mode de valorisation envisagé, un tri des plastiques s'avère nécessaire. Dans le cas de la valorisation matière des plastiques, ceux-ci doivent être triés en fonction de la nature de la, ou des résines, qui les composent de manière à obtenir des gisements homogènes directement valorisables. Dans le cas d'une valorisation thermique ou en tant qu'agent réducteur, en particulier dans le domaine de l'aciérie, l'élimination des résines chlorées, est nécessaire afin de ne pas nuire aux installations et à la qualité de la production.

Différentes techniques permettent le fractionnement d'un mélange de solides et, en particulier, d'un mélange contenant des plastiques, en se basant sur une ou plusieurs propriétés physico-chimiques ségrégatives. Il existe notamment la séparation densimétrique (flottaison ou décantation en milieux denses, centrifugation), la coupure granulométrique (tamisage, fractionnement par centrifugation, ...), la séparation par exploitation des propriétés d'hydrophilicité/hydrophobicité de surface (flottaison) ou encore par changement d'état (fusion sous vide). Il s'avère que les plastiques qui se trouvent en mélanges dans les déchets peuvent présenter des tailles très différentes pour une nature de résine donnée et que, par ailleurs, leur densité souvent proche de 1 peut être modifiée par des adjuvants de type charges minérales ou ignifugeants ce qui rend difficile la séparation fine par coupure granulométrique ou densimétrique. Enfin, tous les plastiques présentent un caractère hydrophobe marqué ce qui les conduit tous à flotter lors d'essais de flottation. En effet, au cours d'un fractionnement par flottation les particules hydrophobes s'attachent à la surface de bulles d'air injectées dans le système et s'élèvent en une mousse pneumatique.

La modification du caractère hydrophobe de la surface en vue de la séparation de certaines classes de plastiques par flottation peut être réalisée par deux voies distinctes : la modification de surface par greffage de surfactants à propriétés spécifiques ou bien l'oxydation de certains groupements présents à la surface des matériaux de nature à modifier les caractères hydrophobe/hydrophile des plastiques à traiter.

### Adsorptions sélectives

Les techniques d'adsorption de macromolécules polaires permettent le fractionnement d'un mélange de plastiques par flottation en assurant l'hydrophilisation réversible d'un ou plusieurs plastiques présents dans le mélange. Solubilisées dans le liquide de flottation, ces macromolécules s'adsorbent en surface du solide et forment une couche externe polaire, augmentant significativement l'interaction du complexe avec l'eau. La sélectivité de l'adsorption repose sur l'exclusivité de la liaison physique entre les groupements de surface d'un plastique et la macromolécule sélectionnée jouant le rôle de plastifiant dans des conditions opératoires données.

Quelques soient les conditions appliquées, l'interaction entre plastique et plastifiant dépendra de leur nature chimique respective, conduisant à une adsorption plus ou moins réversible. Le coeur de la sélectivité de l'adsorption, permettant une séparation par flottation, est la couche d'hydratation, rendant la liaison relativement faible. La seule présence de turbulences dans le liquide ou l'introduction de bulles sont à même de provoquer la désorption sélective du plastifiant. Ces perturbations ont une importance capitale dans la sélectivité, et l'exemple de l'adsorption sélective d'un lignosulphonate sur deux plastiques PS et PVC le montre. Alors qu'une agitation par mobile entraine l'adsorption sur les deux plastiques et donc l'hydrophilisation de leurs surfaces, une agitation par air pulsé ne permet que l'adsorption sur le PVC, l'air chassant la couche d'hydratation et empêchant l'hydrophilisation du PS.

Dans le cadre d'études de séparations de plastiques par flottation, de nombreux mélanges ont été fractionnés par la technique d'adsorption sélective de plastifiants. Le méthylcellulose permet la séparation du POM et du PVC d'un mélange complexe (Shen, Forssberg, and Pugh, "SelectiveFlotationSeparation of Plastics by Chemical ConditioningwithMethyl Cellulose" Resources, Conservation and Recycling 35 (2002) 229-241), les sels de lignine la séparation du PET d'un mélange PET/PVC (Yenial, Kangal, and Guney, "Sélective Flotation of PVC Using Gelatin and Lignin Alkali.", Waste Management &Research(2013) 31(6) 613-617), leslignosulphonates la séparation du PVC d'un mélange PVC/POM (Shibata et al., "Flotation Séparation of Plastics Using Sélective Depressants."Int. J. Miner. Process. 48 (1996) 127-134). Cependant, ces études traitent de mélanges de plastiques vierges ou de déchets de consommation déjà traités. Les plastiques issus de RBA, déchets dangereux et hétérogènes, peuvent difficilement être fractionnés par cette méthode, puisque contaminant inévitablement la phase liquide. De plus les macromolécules sont trop spécifiques en termes d'interactions avec les surfaces des plastiques, de ce fait, la séparation du PVC d'un mélange de plastiques contenant de multiples résines ne peut être atteinte par l'usage d'une seule macromolécule ce qui limite fortement le procédé.

### Hydroxyde de sodium

Dans l'industrie de recyclage des plastiques d'origine domestique, les traitements par une solution d'hydroxyde de sodium sont aujourd'hui courants. Ils permettent entre autres la réalisation, par flottation, d'une séparation efficace du PET présent dans des mélanges contenant du PVC ou du polystyrène (PS). Cette technique repose sur la mise en contact d'un mélange de plastiques avec un milieu alcalin, dans des conditions de concentrations, temps et température contrôlées.

L'article de Carvalho et al «Optimization of FrothFlotationProcedure for Poly(ethyleneterephthalate) Recyclinglndustry» (POLYMER ENGINEERING AND SCIENCE - 2012) enseigne qu'une exposition en milieu alcalin à des températures inférieures à 85°C permet une hydrophilisation superficielle et une augmentation de la rugosité du PET. Au contraire, le PVC n'est que très peu modifié au cours d'un tel traitement. Cette spécificité rend le traitement à l'hydroxyde de sodium applicable à une séparation par flottation du PET.

Par ce traitement combiné avec l'utilisation d'un surfactant spécifique (HOSTAPHAT),une fraction plongée contenant 98,9% de PET peut être collectée avec un rendement de 97%. L'applicabilité de ce traitement à la séparation de plastiques issus de RBA est peu probable étant donné leur composition majoritaire en PP, PVC et ABS, tous peu réactifs en milieu alcalin.

L'usage de ce type de traitement est donc à la fois limité par les mécanismes réactionnels mis en jeu qui ne peuvent impacter que sur un nombre limité de plastiques et de plus par le caractère corrosif du réactif basique nécessaire à sa mise en oeuvre.

### Réactions d'oxydation

Une modification de surface des plastiques à traiter peut être obtenue par une oxydation ménagée de surface.

### Permanganate de potassium

Le permanganate de potassium est un oxydant fort. En milieu acide, la réduction du manganèse est possible de l'état VII (MnO₄⁻) à l'état IV (MnO₂) ou à l'état Il (Mn²⁺). Une réduction de l'état IV à Il est également possible, bien que la forme solide et insoluble de MnO₂ limite cette réaction.

Son utilisation pour l'hydrophilisation de surfaces plastiques (tels que du PP, et/ou PET, HDPE) est aujourd'hui étudiée pour le développement de procédés permettant le traitement de ces surfaces par oxydation superficielle durable pour permettre l'application de revêtements dans des domaines tels que les composites, les adhésifs, les films fins etc., voirepour amorcer leur biodégradation. Pour cet usage, deux voies sont actuellement proposées : l'oxydation en milieu acide et l'oxydation catalysée par rayonnement de micro-ondes.

Roy et al., « Surface Oxidation of Low-densitypolyethylene Films to improvetheirsusceptibilityTowardEnvironmentaldegradation» (Journal of AppliedPolymer Science, Vol 122, 2765-2773 (2011))décrit l'oxydation de films de polyéthylène à basse densité (LDPE) par du permanganate de potassium (0,5M) suivie d'un traitement par microondes de 10 minutes à 180 W pour accélérer la biodégradation des films de LDPE. Une fois le traitement par micro-ondes effectué, les films traités sont lavés à l'acide sulfurique 20%, puis à l'eau distillée jusqu'à ce qu'un pH de 7 soit établi.

Ainsi, Fávaro et al., "Surface Modification ofHDPE, PP, and PET Films with KMnO4/HCl Solutions. "(PolymerDegradation and Stability 92 (2007) 1219-1226) décrit l'influence des concentrations en réactifs, de la température et du temps d'opération sur l'oxydation superficielle des polymères PP, PE et PET par des solutions acides KMnO4/HCl. En s'appuyant sur des résultats de mesures d'angles de contact, de spectroscopie infrarouge à transformée de Fourier et de thermogravimétrie, plusieurs conclusions ont été émises. Le traitement est efficace en termes d'augmentation de l'hydrophilie de surface pour chaque polymère : des groupements carbonyles apparaissent sur le PE, des carboxyles, carbonyles et hydroxyles sur le PP et des groupements hydroxyles aromatiques, carbonyles et carboxyles sur le PET. Cependant, dans le cas du PET, la compétition entre réactions d'oxydation et de saponification du polymère provoque dans des conditions fortes d'oxydation une solubilisation des monomères et l'adoption d'une conformation rendant la surface plus hydrophobe que prévu. Le paramètre prédominant est la concentration du milieu réactionnel. Une oxydation superficielle maximale est atteinte par une réaction dans un milieu [KMnO4]/ [HCl] à 250/500mM à 25°C durant 8h.

Il est cependant regrettable de noter que le mélange proposé n'est pas inerte du fait de la présence d'acide chlorhydrique. Le phénomène observé est rédhibitoire dans le cadre de l'objectif recherché : non seulement la production du dichlore (Cl₂), toxique, ne serait pas une voie durable, mais la possibilité d'engendrer par ce biais une halogénation des matériaux traités serait contraire à l'objectif d'élimination du chlore des plastiques.

Mirabedini et al., "Microwave Irradiation of Polypropylene Surface." (International Journal of Adhesion&Adhesives 24 (2004) 163-170*)* étudie l'oxydation par le permanganate sous rayonnement micro-ondes de lamelles de PP en vue de l'application de revêtements (laques). Le traitement consiste en une étape de lavage de la surface à l'acétone par brossage, suivi d'une étape de trempage dans une solution de H₂SO₄ à 20%. Les lamelles de PP sont alors rincées et positionnées dans une solution de KMnO4 à 0,2, 0,4 et 0,5 mol/L et soumises à un traitement par micro-ondes (2450MHz / 900W). Cette étude établitle fait que dans ce traitement le rayonnement ne participe pas uniquement à l'élévation de la température du milieu réactionnel, mais aussi à une amplification de l'action du permanganate de potassium. Elle permet d'obtenir une augmentation de l'hydrophilie de la surface du PP et une adhésion plus forte de films de laque à base d'acrylique sur de telles surfaces.

Stimulant une réaction par voie radicalaire, l'étude d'une telle oxydation a été réalisée dans un système solide/solide sur les polymères saturés PEet S.E. (Mallakpour, "Microwaveassistedoxidation of polyethyleneundersolid-state conditions with potassium permanganate", EuropeanPolymer Journal, vol.37, pp 1199-1206, 2001).

Mallakpouret al. (« Efficient and novelmethod for surface oxidation of polypropylene in the solid phase usingmicrowave irradiation »,pp 1317-1323, 2000)enseigne qu'un temps de 20s à 90s d'exposition à 900W au contact de permanganate solide permet (sans solvant) l'apparition de groupements C=O et C=C en surface de particules de PP alors que l'exposition des plastiques aux seules micro-ondes n'en modifie pas les groupements chimiques superficiels.

### Ozonation

L'ozonation est un procédé chimique polyvalent permettant la transformation par oxydation de composés organiques comme inorganiques en phase solide, liquide et gazeuse. Parmi les traitements superficiels proposés dans la littérature, l'ozonation est seule à avoir été étudiée, validée et optimisée pour l'élimination du PVC de plastiques issus de RBA (Cf. Reddy et al., "Séparation of PolyvinylChloride (PVC) from Automobile ShredderResidue (ASR) by FrothFlotationwith Ozonation" Journal of Hazardous Materials 147 (2007) 1051-1055).

La mise en oeuvre de ce procédé est simple, mais présente de nombreux risques. L'opération consiste en un bullage de mélange gazeux O₂/O₃ dans un réacteur agité et thermostaté rempli d'une suspension de solides à traiter. Sa production et sa destruction sont réalisées par catalyse in situ.

Des études ont été menées sur la réaction de l'ozone sur le PVC. Les analyses chimiques de surface du PVC avant et après ozonation ont démontré que la réaction entre ozone et PVC s'effectue de manière prévisible par oxydation du carbone et élimination du chlore.

Le traitement par ozonation du PVC rend ce dernier hydrophile à plus de 90%. De ce fait, le PVC est collecté dans la fraction coulée des déchets traités.Du fait de son caractère toxique et des difficultés d'usage qui en découlent, ce mode de traitement apparait cependant comme étant difficile à mettre en oeuvre.

Il existe donc toujours lebesoin d'un procédé permettant de fractionner des déchets de plastiques de naturesdiverses, en particulier ceux contenant du PVC et/ou du POM, de manière à obtenir des fractions concentrées en ces matériaux, qui pallie, au moins en partie, auxinconvénients des procédés de l'art antérieur décrits ci-dessus. En particulier, un tel procédé devrait présenter une plus grande sélectivité et/ou simplicité d'utilisation et/ou une moins grande toxicité de réactifs utilisés ou de produits obtenus.

L'article de HUANG Luoluo et al: "Microwave-assisted surface modification for the séparation of polycarbonate from polymethylmethacrylate and polyvinyl chloride waste plastics by flotation" Waste Management and Research, (2017) vol. 35 (3), 294-300 décrit une méthode de séparation du polycarbonate du polyméthacrylate de méthyle (PMMA) et du chlorure de polyvinyle (PVC) comprenant une étape de flottation par bulles d'air.

Les articles de WANG Chongqing et al: "Optimization of surface treatment for flotation séparation of polyvinyl chloride and polyethylene terephthalate waste plastics using response surface methodology" Journal of Cleaner Production, 2016, 139, 866-872, et "Flotation séparation of polyvinyl chloride and polyethylene terephthalate plastics combined with surface modification for recycling" Waste Management, 2015, 45, 112-117, décrivent un procédé de séparation de particules de PVC et de polyéthylène téréphtalate (PET) comprenant une étape de flottation, en soumettant le mélange de ces particules à un traitement de surface avec une solution de permanganate de potassium.

L'article de WANG Chongquin et al: "A novel process for séparation of polycarbonate, polyvinyl chloride and polymethyl méthacrylate waste plastics by froth flotation" (Waste Management, 2017, 65, 3-10) décrit un procédé de séparation de déchets plastique de polycarbonate, de PVC et de polyméthacrylate de méthyle par flottation, comprenant une étape de traitement par du permanganate de potassium.

DE 195 19 865 décrit une méthode pour séparer un mélange de morceaux de plastiques par flottation comprenant un traitement physique de surface au plasma.

### Description de l'invention

L'invention dans son sens le plus large comprend une méthode de traitement d'un mélange de morceaux de plastiques de natures différentes par une solution de permanganate de potassium, sous irradiation micro-ondes.

Un mode de réalisation de l'invention est un procédé de séparation d'au moins un type de morceaux de plastique à partir d'un mélange de morceaux de plastiques comprenant au moins deux types de plastiques différents choisis dans le groupe constitué par les PP, les PC, les PVC, les ABS, les POM, les PET, les ABS-PS et les ABS-PC; ledit procédé permettant l'obtention d'une fraction enrichie en au moins un desdits au moins deux types de plastiques différents par rapport à la proportion en poids dudit au moins un type de plastique dans ledit mélange de morceaux de plastique ; ledit procédé comprenant les étapes suivantes :
a) une mise en contact dudit mélange de morceaux de plastiques avec une solution aqueuse, saturée ou non, de permanganate de potassium ;
b) une irradiation par microondes dudit mélange en présence de ladite solution aqueuse de permanganate de potassium, à une puissance d'irradiation allant, de préférence, de 0,3 à 6kW pendant, de préférence, 0,5 à 6 min ;
c) une étape de lavage du mélange de morceaux de plastiques par une solution en mélange d'acide sulfurique et de peroxyde d'hydrogène ;
d) une étape de fractionnement, par flottation par bulles d'air ou d'azote en milieu liquide, du mélange de morceaux de plastiques pour obtenir au moins une première fraction et une deuxième fraction ;
e) une étape de récupération d'au moins une desdites fractions ; et, éventuellement,
f) une répétition des étapes a) à e) dudit procédé.

Ce procédé permet la modification des groupements de surface présents sur différents plastiques par un procédé d'oxydation. Une telle modification induit un changement des propriétés d'hydrophobicité/hydrophilicité permettant la séparation des plastiques par une technique de flottationnotamment par bulles d'air. En conséquence une des deux fractions est enrichie en ledit au moins un type de morceaux de plastique.

Ce traitement est relativement rapide et fortement oxydant, et n'affecte que les polymères possédant une forte mobilité de surface, c'est à direune propension à permettre le greffage de groupements oxygénés en surface du polymère par mobilité des électrons. Son application permet une oxydation sélective de plastiques, notamment de plastiques issus de RBA, excluant le PVC, dont la conformation ne permet pas d'oxydation directe. Il est donc particulièrement adapté au traitement de mélanges de matériaux plastiques de plusieurs natures et peut être appliqué à des mélanges de type tertiaire, quaternaire, quinquénaire, etc. Il convient de noter qu'en règle générale plus le taux de cristallinité du polymère sera élevé, plus faible sera sa mobilité de surface.

Un tel procédé,ou méthode,apparait d'un intérêt majeur en cela qu'il peut permettre le recyclage et la valorisation d'une fraction importante de déchets jusqu'alors considérés comme déchets ultimes ou bien recyclés de façon peu satisfaisante. Le procédé peut ainsi permettre l'obtention de produits recyclés épurés proches de résines pures ou bien constitués de fractions dépourvues de PVC qui retrouveront un potentiel d'usage, réduisant ainsi leur empreinte carbone.

Les morceaux, ou fragments, de plastiques objets de la méthode de séparation selon l'invention ont une taille pouvant aller de 100µm à 10mm, de préférence de 500µm à 6mm. Encore plus avantageusement de 1mm à 4mm. Cette taille est mesurée par tamisage conventionnel. La distribution de taille des fragments de plastique est de préférence assez resserrée. Ainsi les morceaux peuvent être d'une taille homogène ou sensiblement identique les uns par rapport aux autres.

Le procédé selon l'invention peut être appliqué à la séparation d'un mélange de plastiques purs d'origine synthétique. Il est cependant particulièrement envisagé que les morceaux de plastiques proviennent de déchets de plastiques, en particulier de déchetsissus de la filière des RBA (Résidus de Broyage Automobile), de celle des DEEE (Déchets Electriques et Electroniques) ou des résidus du milieu hospitalier, voire des OM (Ordures Ménagères). De tels déchets sont généralement préalablement homogénéisés par broyage.

Les déchets issus des RBA comprennent, ou sont essentiellement constitués, par ordre d'importance, d'ABS, PE, PP, POM, PVC et de bois, fils métalliques, autres.

Les déchets issus des DEEE comprennent, ou sont essentiellement constitués, par ordre d'importance,d'ABS-PC, ABS et de PVC.

Les déchets issus des hôpitaux comprennent, ou sont essentiellement constitués, par ordre d'importance, d'ABS-PC, PS et de PVC.

Les déchets issus des OM comprennent, ou sont essentiellement constitués, par ordre d'importance,d'ABS, PC et de PVC.

Lorsque le mélange de fragments de plastiques provient de déchets ou de résidus de broyage, il peut être recommandé d'effectuer une étape préliminaire de lavage à l'eau.

De préférence, le mélange de plastiques comprend, ou est constitué essentiellement, de plastiques choisis dans le groupe constitué par les PVC, POM, ABS-PC, ABS-PS, PET, ABS, PC, PE et PP.

De préférence, le mélange de plastiques comprend, ou est constitué essentiellement, des plastiques choisis dans le groupe constitué par les PVC, POM, ABS-PC, ABS-PS, PET et ABS.

De préférence, le mélange de plastiques comprend, ou est constitué essentiellement, des plastiques choisis dans le groupe constitué par les PVC, POM, ABS-PC, ABS-PS et PC.

De préférence, le mélange de plastiques comprend, ou est constitué essentiellement, des plastiques choisis dans le groupe constitué par les PVC, POM, ABS-PC et ABS-PS
De préférence, le mélange de plastiques comprend, ou est constitué essentiellement, des plastiques choisis dans le groupe constitué par les PVC, POM et ABS-PS.

Selon le procédé de l'invention il est possible d'obtenir une fraction enrichie d'un desdits plastiques. En particulier, il est possible d'obtenir une fraction enrichie en PVC et/ou en POM. Il est également possible d'obtenir une fraction enrichie en ABS-PC.

Comme le procédé selon l'invention est particulièrement destiné au recyclage des matériaux plastiques, ceux-ci peuvent être purs mais peuvent également avantageusement être constitués de matériaux composites pouvant comprendre une proportion relativement faible d'autres composants comme des adjuvants, des charges, etc. Une telle proportion n'excède généralement pas 50% en masse du matériau, de préférence 20%. Généralement cette proportion est inférieure à 10%, voire 5% en masse du matériau en question.

Selon le procédé de l'invention le mélange est mis en contact avec une solutionaqueuse de permanganate de potassium(KMnOa).Cette solution peut-être une solution saturée (env. 0,6M). Alternativement la concentration de la solution de KMnO₄ peut varier dans une gamme allant de 0,1 à 0,6 M, de préférence de 0,2 à 0,6 M et plus préférentiellement aller de 0,3 à 0,4 M. La concentration choisie peut avantageusement être 0,4M ±20%.

Le mélange de plastiques et de la solution de KMnO₄ est soumis à un traitement par micro-ondes. La puissance d'irradiation par microondes dudit mélange avec ladite solutionpeut varier et aller par exemple de 0,3 à 6kW, de préférence de 0,5 à 5KW. Plus particulièrement la puissance peut êtrechoisie dans le groupe constitué de 0,6, 1, 1,5et 2 KW. La fréquence des ondes électromagnétiques peut être la fréquence standard 2450 MHz, qui peut éventuellement varier dans une gamme allant de 2430 à 2470 MHz.

Le traitement par microondes peut éventuellement être associé à une rotation du mélange et/ou une agitation durant l'application desdites ondes électromagnétiques.

La durée de l'application des micro-ondes peut varier de quelques secondes à plusieurs minutes, par exemple de 0,5 à 6 min. De préférence cette période peut être de 1min, de 90 secondes, de 100 secondes ou de 240 secondes.

De manière particulièrement avantageuse des combinaisons de la période d'exposition et de la puissance appliquée peuvent être employées. Ainsi,
- pour une puissance appliquée de 0,6 kW, le temps d'exposition choisi peut être de 4 minutes ;
- pour une puissance appliquée de 1 kW, le temps d'exposition choisi peut être de 1minute ;
- pour une puissance appliquée de 1,5 kW, le temps d'exposition choisi peut être de 1,5 minute ; ou
- pour une puissance appliquée de 2 kW, le temps d'exposition choisi peut être de 100 secondes.

Le mélange est de préférence séparé du milieu contenant le permanganate de potassium par exemple par simple séparation solide liquide S/L.

A l'issue du traitement d'oxydation, un processus de lavage du mélange de morceaux de plastiques est mis en oeuvre. Ce lavagecomporte une étape de lavage oxydatif du mélange de morceaux de plastiques par une combinaison d'acide sulfurique et de peroxyde d'hydrogène (H₂O₂). Une telle combinaison peut se présenter sous la forme d'un mélange, d'une solution, ou sous une autre forme, mais permet avantageusement d'aboutir à un rapport molaire H₂SO₄/H₂O₂de plus de 3. Ce rapport peut varier dans une gamme allant de plus de 3 à 10, plus préférentiellement de 3 à 7 et encore plus préférentiellement de 4 à 6. De préférence,on utilise une solution ayant un rapport molaire H₂SO₄/H₂O₂ d'au moins 3, de préférence aux alentours de 5.

Une telle étape permet une oxydation du réactif résiduel. Elle peut être effectuée pendant une période allant de 2 à 5 minutes.

La combinaison H₂SO₄/H₂O₂utilisée peut être un mélange d'acide sulfurique et d'eau oxygénée utilisée de préférence sous forme d'une solution aqueuse (par ex. à 30%). Un tel mélange peut être constitué de 20mL de H₂SO₄ à 0.25M pour 100µL de H₂O₂ à 30% aq.Dans ce cas, le rapport molaire H₂SO₄/H₂O₂est d'environ 5 ± 20%. Suivant le procédé de l'invention il est alors préféré d'éliminer les réactifs, acide (H₂SO₄), et oxydant (H₂O₂), de manière à obtenir un retour à un pH d'équilibre proche de la neutralité. Cette étape peut être effectuée parun, ou plusieurs, lavages à l'eau. Ainsi l'étape c) du procédé selon l'invention peut être suivie d'une ou plusieurs étapes de lavage à l'eau dudit mélange de morceaux de plastiques.

Le mélange de morceaux de plastiques, une fois traité, est soumis à au moins une étape de fractionnement par flottation par bulles d'air ou d'azote, de préférence par bulles d'air (« froth flottation »). La méthode de séparation par flottation par bulles d'air est une méthode conventionnelle qui est bien connue de la personne de métier. Elle comprend la production d'un flux, de préférence ascendant, de bulles de gaz tel que l'air ou de l'azote dans un milieu liquide dans lequel sont plongés les morceaux de plastiques précédemmenttraités.

La durée de ce traitement peut dépendre des volumes considérés. Ainsi, elle peut être de 1 à10 minutes, et préférentiellement de 2 à8 minutes, par exemple de 5 à 8 minutes ou de 2 à 3 minutes.

Ces bulles peuvent être créées par l'application d'un flux de gaz tel que de l'air ou de l'azotesous un verre fritté de porosité allant de 20 à 40µm et préférentiellement de 32 à37µm par exemple 35µm. Le débit du flux d'air peut aller de 10 à 100ml/min, préférentiellement de 20 à 70ml/min et plus préférentiellement de 40 et 50ml/min. Le milieu de flottation peut également être soumis à une agitation mécanique, par exemple rotative. La vitesse de l'agitation dans ce cas peut aller de 125 à 550tr/min, préférentiellement de 200 à 450tr/min et plus préférentiellement de 300 à 400tr/min).

Une fois le fractionnement obtenu, ces fractions, qui sont constituées de fragments de plastiques, peuvent être séparées du milieu. Chaque fraction est alors plus concentrée (en masse) en au moins un des types de plastiques constituant le mélange initial.

Une fraction peut faire l'objet d'une ou plusieurs nouvelles étapes de fractionnement et/ou de concentration ; de telles étapes peuvent éventuellement comprendre une répétition des étapes a) à e) du procédé décrit ci-dessus. De telles étapes additionnelles de fractionnement et/ou de concentration peuvent également être répétées plus d'une fois, par exemple de préférence 3 fois et même plus, par exemple 5 fois

Ainsi, il est possible en utilisant le procédé selon l'invention d'obtenir une fraction purifiée comprenant une forte proportion d'un type de plastique particulier, voire une fraction étant constituée essentiellement (c'est-à-dire à plus de 90% en masse, voire plus de 95% en masse) de morceaux d'un type de plastique particulier.

Selon un autre aspect de l'invention, celle-ci porte sur un procédé de traitement d'un mélange de fragments de plastiques en vue de leur séparation et ne comprend nécessairement que les étapes a) à b) décrites ci-dessus. Avantageusement l'étape c) de rinçage oxydatif est également employée, éventuellement suivi d'un ou plusieurs rinçages à l'eau, tel que cela est également décrit dans la présente description.

En effet les étapes de traitement des fragments de plastiques et les étapes de séparation ou de fractionnement de ceux-ci peuvent avoir lieu de manière séparée aussi bien au niveau spatial que temporel.

Selon un aspect préférentiel de l'invention, le procédé ne comprend pas d'étape d'ozonation du mélange de fragments de plastiques.

Selon un autre aspect de l'invention, celle-ci porte sur un procédé de séparation qui ne comprend pas les étapes c) à d) décrites ci-dessus. Un tel procédé est particulièrement adapté à obtenir un traitement de mélange de fragments de plastiques purs et ne provenant pas de déchets industriels. Avantageusement l'étape c) de rinçage est également employée, éventuellement suivi d'un ou plusieurs rinçages à l'eau, tel que décrit dans la présente description.

Ainsi, un autre aspect de l'invention porte sur le traitement d'unefraction de morceaux de plastiques traités par un des procédés selon l'invention.

### Description des Figures

Figure 1 est la représentation schématique d'étapes de procédés selon l'invention tels que mis en oeuvre dans les exemples 1 à 4.
Figure 2 est une représentation d'un dispositif classique d'un tube Hallimond utilisé dans la mise en oeuvre du procédé selon l'invention.

### Exemples de mise en oeuvre de l'invention

Dans les exemples décrits ci-après, les mélanges de fragmentsde plastiques à traiter, quelles qu'en soient leurs natures, sont immergés dans une solution aqueuse saturée de permanganate de potassium (405mM à 20°C), puis traités par un rayonnementmicro-ondes à une puissance d'irradiation comprise entre 0,3 et 2kW pour des durées comprises entre 0,5 et 6 minutes.

L'équipement utilisé pour réaliser les exemples 1 à 4 décrits est un four à micro-ondes de laboratoire piloté informatiquement. Le magnétron (lex) fournit une onde à 2450MHz sur une gamme de puissance de 0,6 à 6kW. Sa contenance est de 100L. Même si ce matériel est équipé d'un plateau de céramique rotatif qui est susceptible de permettre l'obtention d'une relative homogénéisation de l'exposition, ce dispositif n'a pas été utilisé pour s'assurer de la reproductibilité des exemples. Ce matériel a été choisi dans le but de contrôler au mieux les conditions opératoires lors du traitement sous micro-ondes. L'emploi d'un four de laboratoire piloté prévaut par sa certification et la possibilité de modulation des paramètres de puissance incidente et de temps d'exposition.

A l'issue du traitement d'oxydation, un processus de lavage est mis en oeuvre, comportant une oxydation du réactif résiduel pendant2 à 5 minutes par lavage avec une solution en mélange acide sulfurique/ peroxyde d'hydrogène (dans un rapport de 20mL de H₂SO₄ à 0.25M pour 100µL de H₂O₂ à 30%aq.), puis par une séquence de lavages successifs à l'eau permettant d'éliminer les réactifs, et acide (H₂SO₄), et oxydant (H₂O₂) et, un retour à un pH d'équilibre proche de la neutralité.

Cette étape permet notamment d'éliminer les ions Mn²⁺. Les lavages sont effectués à l'eau désionisée ou de réseau (eau du robinet) jusqu'à avoir par mesure de pH-métrie une valeur constante de ce paramètre voisine de 7.

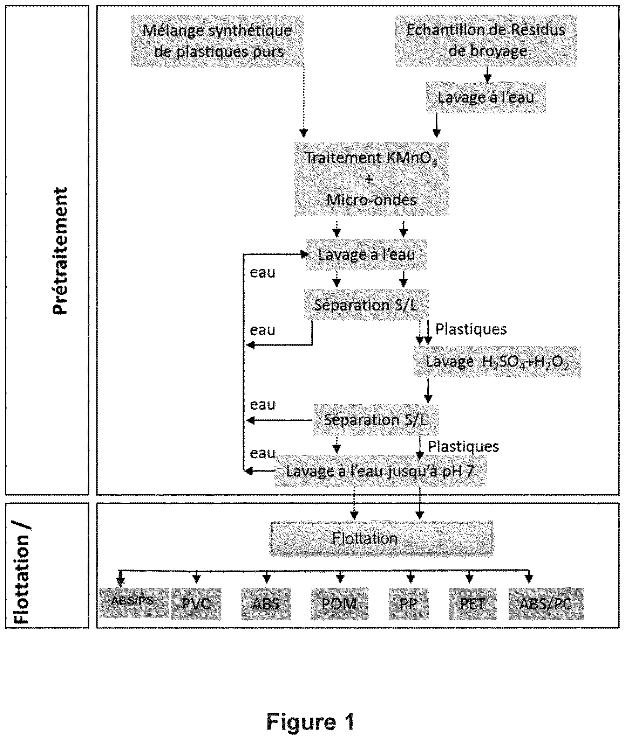

Les étapes principales du procédé des exemples 1 à 4 sontreprésentéespar le schéma de la figure 1.

Pour exemplifier le procédé selon l'invention les mélanges de morceaux de plastiques utilisés sont soit des mélanges de billes de plastiques telles qu'utilisées en plasturgie (exemple 1 et 2) soit des déchets de plastiques, en particulier provenant des milieux hospitaliers et déchiquetés. Les fragmentsde plastiques ont généralement une taille allant de 300µmà 40mm(analysé par tamisage) et une taille moyenne d'environ 500µm à 30mm (analysée par tamisage).

Les billes de plastiques utilisées sont constituées de billes millimétriques de plastique pur dont la formule développée est donnée ci-dessous dans le tableau 1.

**Tableau 1 : Nature et désignation des polymères modèles**

| **Nom** | ***ABS*** | ***ABS-PC*** | ***PET*** |
|---|---|---|---|
| **Polymère** | acrylonitrile-butadiène-styrène | acrylonitrile-butadiène-styrène-polycarbonate | polyéthylène téréphtalate |
| **Formule topologique** | 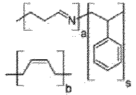 | 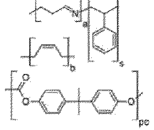 | 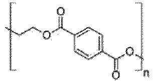 |

| **Nom** | ***POM*** | ***PP*** | ***PVC*** |
|---|---|---|---|
| **Polymère** | polyoxyméthylène | polypropylène | polychlorure de vinyle |
| **Formule topologique** | 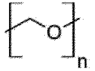 | 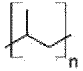 | 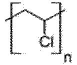 |

Le polycarbonate a pour formule : -[CO-O-*p*Ph-C(CH₃)₂-*p*Ph-O]*ₙ*tel qu'indiqué ci-dessus.

Le mélange suivant aété réalisé en masse pour une masse totale de 126g :
11,1% PVC, 44,5% POM, 22,2% ABS-PC, 11,1% PET et 11,1% ABS. Ceci conduit à une teneur en chlore totale voisine de 11% ce qui correspond à la valeur moyenne observée dans les plastiques issus des résidus de broyage. Un tel mélange se rapproche donc de la nature des gisements de déchets particulièrement viséspar le procédé selon l'invention et à été utilisé dans les exemples 1 et 2.

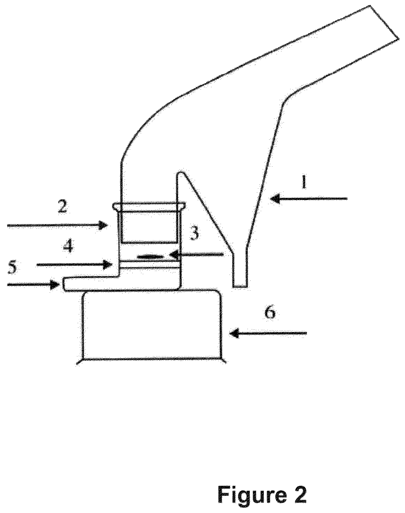

Ces exemples permettent la séparation par entrainement par un flux de bulles de gaz ascendantdes particules laissées hydrophobes decelles rendues hydrophiles. Le dispositif utilisé est un dispostif de laboratoire connu,appelé tube Hallimond (figure 2). En résumé, il est constitué d'une chambre de flottation (2) surmonté d'un tube coudé à environ 30° par rapport à la verticale. Les mélanges de plastiques à séparer, sont placés dans cette chambre et mis en contact avec un flux ascendant de bulles d'azote pendant une durée de 6minutes. Ces bulles sont créées par l'application d'un flux d'azote(5) sous un verre fritté(4) de porosité de35µm. Le flux d'azote (5)est appliqué à un débit de 25 ml/min. Le milieuest également soumis à une agitation mécanique réaliséeà l'aide d'un barreauaimanté (3) propulsépar un agitateur magnétique (6). La vitesse de cet agitateurest de 250tr/min. Un second résevoir s'étendant verticalement de la partie coudée vers le bas du dispositif constitue un réservoir (1) où les solides « flottants » sont récupérés. Les particules de plastiques ainsi séparées ont été collectées séparément sous forme d'une partie flottante et d'une partie non flottante qui se distinguent par leurs propriétés de surface. Chaque fraction a été caractérisée après récupération, afin de quantifier les différentes résines constituant ces fractions (flottante, non flottante).

### Exemple 1 : traitement d'un mélange de plastiques modèles, conditions 1

Le traitement d'un tel mélange modèle de plastiques (billes de plastiques issues de la plasturgie d'une taille 3 à 5 mm) par une solution saturée de KMnO4 sous irradiation µ-ondes à une puissance de 0.6kW, a été mené pendant 4 minutes. L'échantillon ainsi traité a ensuite été lavé par H₂SO₄ + H₂O₂ puis à l'eau de ville jusqu'à un pH d'équilibre voisin de 7, tel que décrit ci-dessus.

A l'issue du traitement, un traitement par flottation a été mené dans un tube Hallimond (figure 2) sur le mélange traité dans les conditions citées précédemment a conduit à l'obtention d'une séparation des particules selon les résultats suivants (tableau 2) :

**Tableau 2 : Résultats des essais de flottation réalisés après traitement selon le procédé d'un mélange de plastiques purs comprenant PVC, ABS, ABS-PC, PET et POM présents dans des proportions mentionnées dans le tableau (TV : tout venant). Les pourcentages sont donnés en pourcentages massiques.**

| Résine | Fraction (%) | PVC (%) | POM (%) | ABS-PC (%) | PET (%) | ABS (%) |
|---|---|---|---|---|---|---|
| Composition TV | | 11,1 | 44,4 | 22,2 | 11,2 | 11,1 |
| Fraction flottée de la résine (%) | 55,1 | 98,1 | 2,7 | 99,1 | 92,7 | 97,7 |
| Fraction non flottée de la résine (%) | 44,9 | 1,9 | 97,3 | 0,9 | 7,3 | 2,3 |

La flottation d'un tel échantillon après traitement dans les conditions énoncées ci-dessus démontre clairement son intérêt. A l'issue du traitement, la flottation de l'échantillon conduit, en effet, à la séparation quasi quantitative du POM vis-à-vis des autres résines permettant ainsi d'envisager sa valorisation.

Par ailleurs, afin de contrôler l'impact des traitements sur les propriétés de surface des plastiques et, par ailleurs, de quantifier l'effet de ces modifications sur la flottabilité ou non des plastiques, certaines caractérisations et mesures de leurs propriétés ont été menées : en premier lieu, des analyses permettant de répondre au besoin de mesurer l'hydrophilie superficielle des solides avant et après traitement. Le traitement chimique doit, en effet, amener à l'hydrophilisation sélective d'un ou plusieurs plastiques du mélange afin de permettre leur séparation par flottation.Pour cela, la technique de la mesure d'angle de contact solide/liquide par la méthode de la goutte sessile a été utilisée. Cette méthode optique traduit directement le comportement hydrophile ou hydrophobe d'une surface solide vis-à-vis d'un liquide à une température donnée par l'angle formé entre le solide et une goutte déposée à sa surface. Par ailleurs, des caractérisations par spectroscopie infra-rouge en réflexion atténuée ont été menées afin de déterminer la nature des modifications chimiques engendrées à la surface des plastiques par les traitements mis en oeuvre. Ce type de caractérisation permet de lier nature des groupements chimiques de surface générés et conditions de traitement.

### Exemple 2 : traitement d'un mélange de plastiques modèles, conditions 2

Le traitement d'un tel mélange de plastiques modèles, s'avérant totalement hydrophobe avant traitement, par une solution de permanganate de potassium (KMnO₄) à 0,4M (telle que décrite précédemment)sous irradiation µ-ondes à une puissance de 1 kW, a été mené pendant 60 secondes. L'échantillon ainsi traité a ensuite été lavé par H₂SO₄ + H₂O₂ puis à l'eau de ville jusqu'à un pH d'équilibre voisin de 7 tel que décrit ci-dessus.

A l'issue du traitement, un traitement par flottation a été mené dans un tube Hallimond sur le mélange traité (figure 2) dans les conditions citées précédemment. Il a conduit à l'obtention d'une séparation des particules selon les résultats suivants (tableau 3) :

**Tableau 3 : Résultats des essais de flottation réalisés, après traitement selon le procédé d'un mélange de plastiques purs comprenant PVC, ABS, ABS-PC, PET et POM présents dans des proportions similaires mentionnées dans le tableau (TV : tout venant). Les pourcentages sont donnés en pourcentages massiques.**

| Résine | Fraction (%) | PVC (%) | POM (%) | ABS-PC (%) | PET (%) | ABS (%) |
|---|---|---|---|---|---|---|
| Composition TV | | 21,2 | 19,7 | 21,2 | 21,2 | 16,7 |
| Fraction flottée de la résine (%) | 26 | 78,6 | 15,4 | 0 | 7,1 | 9,1 |
| Fraction non flottée de la résine (%) | 74 | 21,4 | 84,6 | 100 | 92,9 | 90,9 |

Cet essai montre (tableau 3) que le traitement mené dans des conditions adaptées peut permettre une séparation quasi-quantitative, dans la fraction flottée, du PVC qui est ici récupéré à plus 78%. Les autres résines sont en grande majorité récupérées dans la fraction non flottante.

### Exemple 3 : traitement d'un échantillon de déchets de plastiques hospitaliers en mélange

Un déchet réel de plastiques constitué de fragments de plastiques de taille millimétrique (c'est-à-dire que la plus grande dimension de ces particules n'excède pas environ 10 mm) et provenant du milieu hospitalier composé de 20,2% de PVC, 24,2 de PC, de 37,8% d'ABS-PS et de 17,9% de POM a été traité selon le procédé. Le traitement a été mené en utilisant une solution de KMnO₄ (0.4M) sous irradiation µ-ondes à une puissance de 1.5kW pendant 90 secondes. L'échantillon ainsi traité a ensuite été lavé par une solution mixte de H₂SO₄ + H₂O₂ puis à l'eau de ville jusqu'à obtention d'un pH d'équilibre voisin de 7 tel que décrit précédemment.

A l'issue du traitement, un traitement par flottation a été mené dans un tube Hallimond (figure 2) sur le mélange traité dans les conditions citées précédemment. Il a conduit à la séparation des particules selon les résultats suivants (tableau 4) :

**Tableau 4 : Résultats de la flottation réalisée sur un déchet de plastiques en mélange comprenant PVC, PC, ABS-PS et POM après traitement selon le procédé (TV : tout venant). Les pourcentages sont donnés en pourcentages massiques. TV an :Tout venant analysé, TV reconst : Tout venant reconstitué, ρ % : taux de récupération du plastique**

| Produits | **Pds %** | **PVC** | | **PC** | | **ABS-PS** | | **POM** | |
|---|---|---|---|---|---|---|---|---|---|
| | | **Teneur %** | **ρ, %** | **Teneur %** | **ρ, %** | **Teneur %** | **ρ, %** | **Teneur %** | **ρ, %** |
| Flottant | 30,8 | 32,1 | 49,0 | 39,0 | 49,6 | 11,4 | 9,3 | 17,5 | 30,2 |
| Coulant | 69,2 | 14,9 | 51,0 | 17,6 | 50,4 | 49,5 | 90,7 | 18,0 | 69,8 |
| TV an | | 20,2 | | 24,2 | | 37,8 | | 17,9 | |
| TV reconst | 100,0 | 20,2 | 100,0 | 24,2 | 100,0 | 37,8 | 100,0 | 17,9 | 100,0 |

Cet essai (tableau 4) montre que le traitement mené sur un déchet réel de plastiques dans des conditions spécifiques permet de concentrer l'ABS-PS dans la fraction coulante des plastiques à une teneur voisine de 50% avec un taux de récupération supérieur à 90%. Le PVC se trouve concentré dans la fraction flottante à une teneur supérieure à 30% pour un taux de récupération proche de 50%, de même le PC est concentré dans la fraction flottante à une teneur proche de 40%, double par rapport au déchet traité, avec un taux de récupération voisin de 50%.

### Exemple 4 : traitement d'un échantillon de déchets de plastiques hospitaliers en mélange

Un déchet réel de plastiquesconstitué de fragments de plastiques de taille millimétrique (la plus grande dimension de ces particules n'excède pas environ 10 mm) etprovenant du milieu hospitalier composé de 20,0% de PVC, 38,1% de PC, de 26,7% de ABS-PS et de 15,2% de POM a été traité selon le procédé. Le traitement a été mené en utilisant une solution de KMnO4 (0.4M) sous irradiation µ-ondes à une puissance de 2kW pendant 100 secondes. L'échantillon ainsi traité a ensuite été lavé par H₂SO₄ + H₂O₂ puis à l'eau de ville jusqu'à un pH d'équilibre voisin de 7.

A l'issue du traitement, un traitement par flottation a été mené dans un tube Hallimond (figure 2) sur le mélange traité dans les conditions citées précédemment. Il a conduit à la séparation des particules selon les résultats suivants (tableau 5).

**Tableau 5 : Résultats de la flottation réalisée sur un déchet de plastiques en mélange comprenant PVC, PC, ABS-PS et POM après traitement selon le procédé. (TV : tout venant). Les pourcentages sont donnés en pourcentages massiques. TV an : Tout venant analysé, TV reconst : Tout venant reconstitué, ρ % : taux de récupération du plastique**

| **Produits** | **Pds %** | **PVC** | | **PC** | | **ABS-PS** | | **POM** | |
|---|---|---|---|---|---|---|---|---|---|
| | | **Teneur %** | **ρ, %** | **Teneur %** | **ρ, %** | **Teneur %** | **ρ, %** | **Teneur %** | **ρ, %** |
| Flottant | 33,0 | 52,4 | 86,1 | 16,3 | 14,1 | 3,3 | 4,0 | 28,0 | 60,7 |
| Coulant | 67,0 | 4,2 | 13,9 | 48,8 | 85,9 | 38,1 | 96,0 | 8,9 | 39,3 |
| TV an | | 20,0 | | 38,1 | | 26,7 | | 15,2 | |
| TV reconst | 100,0 | 20,1 | 100,0 | 38,1 | 100,0 | 26,6 | 100,0 | 15,2 | 100,0 |

Cet essai (tableau 5) montre que le traitement mené sur un déchet réel de plastiques dans des conditions spécifiques permet la concentration de l'ABS-PS dans la fraction coulante des plastiques à une teneur voisine de 40% avec un taux de récupération supérieur à 95%. Le PVC se trouve concentré dans la fraction flottante à une teneur supérieure à 50% pour un taux de récupération supérieur à 85%, de même le PC est concentré dans la fraction coulante à une teneur proche de 50% avec un taux de récupération supérieur à 85%.

Plusieurs étapes de flottation et de séparation successives peuvent être effectuées pour augmenter la récupération sélective des plastiques traités.

## Revendications

1. Un procédé de séparation d'au moins un type de morceaux de plastique à partir d'un mélange de morceaux de plastiques comprenant au moins deux types de plastiques différents choisis dans le groupe constitué par les PP, les PC, les PVC, les ABS, les POM, les PET, les ABS-PS et les ABS-PC; ledit procédé permettant l'obtention d'une fraction enrichie en au moins un desdits au moins deux types de plastique différents par rapport à la proportion en poids dudit au moins un type de plastique dans ledit mélange de morceaux de plastique; ledit procédé comprenant les étapes suivantes :
a) une mise en contact dudit mélange de morceaux de plastiques avec une solution aqueuse, saturée ou non, de permanganate de potassium ;
b) une irradiation par microondes dudit mélange en présence de ladite solution aqueuse de permanganate de potassium, à une puissance d'irradiation allant de 0,3 à 6kW pendant 0,5 à 6 min ;
c) une étape de lavage du mélange de morceaux de plastiques par une solution en mélange d'acide sulfurique et de peroxyde d'hydrogène ;
d) une étape de fractionnement, par flottation par bulles d'air ou d'azote en milieu liquide, du mélange de morceaux de plastiques pour obtenir au moins une première fraction et une deuxième fraction;
e) une étape de récupération d'au moins une desdites fractions; et, éventuellement,
f) une répétition des étapes a) à e) dudit procédé.

2. Le procédé selon la revendication 1, dans lequel les morceaux de plastiques ont une taille pouvant aller de 100 µm à 10 mm, de préférence de 500 µm à 6mm, et encore plus avantageusement de 1mm à 4mm.

3. Le procédé selon la revendication 1 ou la revendication 2, dans lequel les morceaux de plastiques ont une taille homogène les uns par rapport aux autres.

4. Le procédé selon l'une quelconque des revendications, dans lequel lesdits morceaux de plastiques proviennent de déchets de plastiques, en particulier de déchets issus de la filière de Résidus de Broyage Automobile, de celle des Déchets Électriques et Électroniques, du milieu hospitalier ou des Ordures Ménagères.

5. Le procédé selon l'une quelconque des revendications 1 à 4, dans lequel ladite solution aqueuse de permanganate de potassium est soit une solution saturée soit une solution dont la concentration en permanganate de potassium varie de 0,2 à 0,6M.

6. Le procédé selon l'une quelconque des revendications 1 à 5, dans lequel la puissance d'irradiation par microondes dudit mélange avec ladite solution varie de 0,5 à 5KW et de préférence est choisie dans le groupe constitué de 0,6, 1, 1,5 et 2 KW.

7. Le procédé selon l'une quelconque des revendications 1 à 6, dans lequel la durée de l'application des micro-ondes est de 1min, de 90 secondes, de 100 secondes ou de 240 secondes.

8. Le procédé selon l'une quelconque des revendications 1 à 7, dans lequel la combinaison d'acide sulfurique et de peroxyde d'hydrogène se présente sous forme d'une solution ayant un rapport molaire H₂SO₄/H₂O₂ d'au moins 3.

9. Le procédé selon l'une quelconque des revendications 1 à 8, dans lequel l'étape c) est suivie d'une ou plusieurs étapes de lavage à l'eau dudit mélange de morceaux de plastiques.

10. Le procédé selon l'une quelconque des revendications 1 à 9, dans lequel l'étape de fractionnement par flottation comprend une étape de flottation par bulles d'air.

11. Le procédé selon l'une quelconque des revendications 1 à 10, dans lequel l'irradiation par microondes est associée à une rotation du mélange et/ou une agitation durant l'application desdites ondes électromagnétiques.

12. Le procédé selon la revendication 10, dans lequel , le milieu de flottation est également soumis à une agitation mécanique rotative.

13. Le procédé selon l'une quelconque des revendications 1 à 12, où ledit procédé ne comprend pas d'étape d'ozonation du mélange de fragments de plastiques.

14. Le procédé selon l'une quelconque des revendications 1 à 13, dans lequel l'étape c) est suivie d'une ou plusieurs étapes de lavage à l'eau dudit mélange de morceaux de plastiques, de manière à obtenir un retour à un pH d'équilibre proche de la neutralité.

15. Le procédé selon l'une quelconque des revendications 1 à 14, où le mélange de plastiques comprend, ou est constitué essentiellement, des plastiques choisis dans le groupe constitué par les PVC, POM et ABS-PS.

## Patentansprüche

1. Verfahren zum Abtrennen von mindestens einer Art von Kunststoffstücken aus einem Gemisch von Kunststoffstücken, das mindestens zwei verschiedene Arten von Kunststoffen enthält, die aus der Gruppe ausgewählt sind, die aus PP, PC, PVC, ABS, POM, PET, ABS-PS und ABS-PC besteht, wobei das Verfahren die Gewinnung einer Fraktion ermöglicht, die mit mindestens einer der mindestens zwei verschiedenen Arten von Kunststoffen angereichert ist, bezogen auf den Gewichtsanteil der mindestens einen Art von Kunststoff in dem Gemisch von Kunststoffstücken, wobei das Verfahren die folgenden Schritte umfasst:
a) Inkontaktbringen der Mischung aus Kunststoffstücken mit einer gesättigten oder ungesättigten wässrigen Lösung von Kaliumpermanganat;
b) Mikrowellenbestrahlen der Mischung in Gegenwart der wässrigen Kaliumpermanganatlösung bei einer Bestrahlungsleistung von 0,3 bis 6 kW für 0,5 bis 6 min;
c) einen Schritt des Waschens der Mischung aus Kunststoffstücken mit einer Mischlösung aus Schwefelsäure und Wasserstoffperoxid;
d) einen Schritt des Fraktionierens der Mischung aus Kunststoffstücken durch Flotation mit Luft- oder Stickstoffblasen in einem flüssigen Medium, um mindestens eine erste Fraktion und eine zweite Fraktion zu erhalten;
e) einen Schritt des Rückgewinnens von mindestens einer der Fraktionen; und gegebenenfalls
f) eine Wiederholung der Schritte a) bis e) des Verfahrens.

2. Verfahren nach Anspruch 1, bei dem die Kunststoffstücke eine Größe haben, die von 100 µm bis 10 mm, vorzugsweise von 500 µm bis 6 mm und noch vorteilhafter von 1 mm bis 4 mm reichen kann.

3. Verfahren nach Anspruch 1 oder 2, wobei die Kunststoffstücke eine einheitliche Größe im Verhältnis zueinander haben.

4. Verfahren nach einem der Ansprüche, bei dem die Kunststoffstücke aus Kunststoffabfällen stammen, insbesondere aus Abfällen aus dem Bereich der Automobilschredderrückstände, des Elektro- und Elektronikschrotts, aus dem Krankenhausbereich oder aus dem Hausmüll.

5. Verfahren nach einem der Ansprüche 1 bis 4, wobei die wässrige Kaliumpermanganatlösung entweder eine gesättigte Lösung oder eine Lösung mit einer Kaliumpermanganatkonzentration im Bereich von 0,2 bis 0,6 M ist.

6. Verfahren nach einem der Ansprüche 1 bis 5, wobei die Leistung der Mikrowellenbestrahlung der Mischung mit der Lösung im Bereich von 0,5 bis 5 KW liegt und vorzugsweise aus der Gruppe ausgewählt wird, die aus 0,6, 1, 1,5 und 2 KW besteht.

7. Das Verfahren nach einem der Ansprüche 1 bis 6, wobei die Dauer der Mikrowellenanwendung 1 min, 90 Sekunden, 100 Sekunden oder 240 Sekunden beträgt.

8. Verfahren nach einem der Ansprüche 1 bis 7, wobei die Kombination aus Schwefelsäure und Wasserstoffperoxid in Form einer Lösung mit einem Molverhältnis H₂SO₄/H₂O₂ von mindestens 3 vorliegt.

9. Verfahren nach einem der Ansprüche 1 bis 8, wobei auf Schritt c) ein oder mehrere Schritte folgen, in denen die Mischung aus Kunststoffstücken mit Wasser gewaschen wird.

10. Verfahren nach einem der Ansprüche 1 bis 9, wobei der Schritt des Fraktionierens durch Flotation einen Schritt der Luftblasenflotation umfasst.

11. Verfahren nach einem der Ansprüche 1 bis 10, bei dem die Mikrowellenbestrahlung mit einer Rotation der Mischung und/oder einem Rühren während der Anwendung der elektromagnetischen Wellen verbunden ist.

12. Verfahren nach Anspruch 10, bei dem das Flotationsmedium ebenfalls einer rotierenden mechanischen Bewegung unterzogen wird.

13. Das Verfahren nach einem der Ansprüche 1 bis 12, wobei das Verfahren keinen Schritt der Ozonisierung der Mischung aus Kunststofffragmenten umfasst.

14. Verfahren nach einem der Ansprüche 1 bis 13, wobei auf Schritt c) ein oder mehrere Schritte folgen, in denen die Mischung aus Kunststoffstücken mit Wasser gewaschen wird, um eine Rückkehr zu einem Gleichgewichts-pH-Wert nahe Neutralität zu erreichen.

15. Verfahren nach einem der Ansprüche 1 bis 14, wobei die Kunststoffmischung Kunststoffe umfasst oder im Wesentlichen aus Kunststoffen besteht, die aus der Gruppe ausgewählt sind, die aus PVC, POM und ABS-PS besteht.

## Claims

1. A method for separating at least one type of plastic pieces from a mixture of plastic pieces comprising at least two different types of plastics selected from the group consisting of PP, PC, PVC, ABS, POM, PET, ABS-PS and ABS-PC; said method allowing to obtain a fraction which is enriched in at least one of said at least two different types of plastic in relation to the proportion by weight of said at least one type of plastic in said mixture of pieces of plastic; said process comprising the following steps:
a) contacting said mixture of pieces of plastic with an aqueous solution, which is saturated or not, of potassium permanganate;
(b) irradiating said mixture with microwaves in the presence of said aqueous solution of potassium permanganate, at an irradiation power ranging from 0.3 to 6 kW for 0.5 to 6 min;
(c) a step of washing the mixture of plastic pieces with a mixture solution of sulphuric acid and hydrogen peroxide;
(d) a step of fractionation, by air or nitrogen bubble flotation in a liquid medium, of the mixture of pieces of plastics to obtain at least a first fraction and a second fraction;
(e) a step of recovering at least one of those fractions; and, optionally,
(f) a repetition of steps (a) to (e) of the said process.

2. The method according to claim 1, wherein the plastic pieces are between 100 µm and 10 mm in size, preferably 500 µm to 6 mm, and even more advantageously from 1 mm to 4 mm.

3. The method according to claim 1 or claim 2, wherein the pieces of plastics are homogeneous in size with respect to each other.

4. The method according to any one of the claims, wherein said pieces of plastics are derived from plastic waste, in particular waste from the Automotive Shredding Residue Sector, the Electrical and Electronic Waste Sector, the Hospital Sector or Household Waste.

5. The method according to any one of claims 1 to 4, wherein said aqueous solution of potassium permanganate is either a saturated solution or a solution having a concentration of potassium permanganate in the range of 0.2 to 0.6M.

6. The method according to any one of claims 1 to 5, wherein the microwave irradiation power of said mixture with said solution varies from 0.5 to 5 KW and preferably is selected from the group consisting of 0.6, 1, 1.5 and 2 KW.

7. The method according to any one of claims 1 to 6, wherein the duration of the application of the microwaves is 1 min, 90 seconds, 100 seconds or 240 seconds.

8. The method according to any one of claims 1 to 7, wherein the combination of sulphuric acid and hydrogen peroxide is in the form of a solution having a molar ratio H₂SO₄/H₂O₂ of at least 3.

9. The method according to any one of claims 1 to 8, wherein step (c) is followed by one or more steps of washing said mixture of plastic pieces with water.

10. The method according to any one of claims 1 to 9, wherein the step of fractionation by flotation comprises an air bubble flotation step.

11. The method according to any one of claims 1 to 10, wherein the irradiation with microwaves is associated with a rotation of the mixture and/or stirring during the application of said electromagnetic waves.

12. The method of claim 10, wherein , the flotation medium is also subjected to rotational mechanical agitation.

13. The method according to any one of claims 1 to 12, wherein said method does not comprise a step of ozonation of the mixture of plastic fragments.

14. The method according to any one of claims 1 to 13, wherein step (c) is followed by one or more steps of washing with water said mixture of plastic pieces, so as to achieve a return to an equilibrium pH close to neutral.

15. The method according to any one of claims 1 to 14, wherein the mixture of plastics comprises, or consists essentially of, plastics selected from the group consisting of PVC, POM and ABS-PS.
